# EUROPEAN PATENT SPECIFICATION

(11) **EP 0 299 184 B1**
(45) Date of publication and mention of the grant of the patent: **05.01.1994**
(21) Application number: 88108571.6
(22) Date of filing: 28.05.1988
(51) Int. Cl.: B64D 15/16

(54) **De-icer**
Enteisungsanlage
Dégivreur

(30) Priority: 16.07.1987 US 74107; 16.07.1987 US 74209; 16.07.1987 US 74196
(43) Date of publication of application: 18.01.1989
(60) Divisional application: 93103031.6
(73) Proprietor: THE B.F. GOODRICH COMPANY, Akron Ohio 44313-1799 (US)
(72) Inventor: Briscoe, James A., Doylestown Ohio 44230 (US); Putt, James Craig, Doylestown Ohio 44230 (US); Phillips, Ronald Wayne, Mogadore Ohio 44260 (US); Tenison, Gary Vincent, N.W. Massillon Ohio 44646 (US); Leffel, Kevin Lee, Akron Ohio 44319 (US)
(74) Representative: Selting, Günther, Dipl.-Ing.

(56) References cited:
- EP-A- 0 235 542
- GB-A- 505 433
- GB-A- 541 268
- GB-A- 2 128 155
- GB-A- 2 139 585
- US-A- 3 394 723
- US-A- 3 549 964
- US-A- 3 777 746
- US-A- 4 613 102
- US-A- 4 747 575

## Description

This invention relates to an apparatus for de-icing leading edges. More particularly, this invention pertains to the de-icing of aircraft leading edge surfaces such as are associated with wings, struts, stabilizers, and propellers. Specifically, this invention relates to pneumatically actuated de-icers for use on leading edges.

Since the early days of powered aviation, aircraft have been, from time to time, troubled by accumulations of ice on component surfaces of the aircraft such as wings and struts, under certain flight conditions. Unchecked, such accumulations can eventually so laden the aircraft with additional weight and so alter the aerofoil configuration of the wings as to precipitate an unflyable condition. A search for means to combat the accumulation of ice under flying conditions has been a continuing one and has resulted in three generally universal approaches to removing accumulated ice, a process known generically as de-icing.

In one form of de-icing, leading edges, that is edges of the aircraft component on which ice accretes and are impinged upon by the air flowing over the aircraft and having a point at which this airflow stagnates, are heated to loosen adhesive forces between accumulating ice and the aircraft component. Once loosened, this ice is generally blown from the aircraft component by the airstream passing over the aircraft. Two methods of heating leading edges have enjoyed significant popularity. In one approach a heating element is placed in the leading edge zone of the aircraft component either by inclusion in a rubber boot applied over the leading edge or by incorporation into the skin structure of the aircraft component. This heating element, typically powered by electrical energy derived from a generating source driven by one or more of the aircraft engines, is switched on and off to provide heat sufficient to loosen accumulating ice. In small aircraft powered typically by one or two engines, a sufficient quantity of electrical power may be unavailable for use in electrical de-icing.

In the other heating approach, gasses at elevated temperature from one or more compression stages of a turbine engine are circulated through leading edges of components such as wings and struts in order to effect a thermal de-icing or anti-icing effect. Employed typically only in aircraft powered by turbine engines, the use of these so-called compressor bleeds or by-pass streams from the aircraft engine turbine can result in reduced fuel economy and a lower turbine power output.

The second commonly employed method for de-icing employs chemicals. In limited situations a chemical has been applied to all or part of the aircraft to depress adhesion forces associated with ice accumulations forming upon an aircraft or to depress the freezing point of water collecting upon surfaces of the aircraft.

The remaining commonly employed method for de-icing is typically termed mechanical de-icing. In the principal commercial mechanical de-icing means, pneumatic de-icing, the leading edge zone of a wing or strut component of an aircraft is covered with a plurality of expandable, generally tube-like structures inflatable employing a pressurized fluid, typically air. Upon inflation, the tubular structures tend to expand substantially the leading edge profile of the wing or strut and crack ice accumulating thereon for dispersal into the airstream passing over the aircraft component. Typically, such tube like structures have been configured to extend substantially parallel to the leading edge of the aircraft component. For aerofoils such as wings and stabilizers, these structures may extend the entire span of the aerofoil. A plurality of tube-like structures frequently are positioned on a wing or strut and typically are configured to be parallel to the leading edge of the wing or strut as by placement of a spanwise succession of tubes spaced in chordwise manner away from the leading edge. The plurality of tubes can provide an ice removal function to the entire leading edge profile of the aerofoil or strut.

Conventionally, pneumatic de-icers are formed from a compound having rubbery or substantially elastic properties. Typically, the material forming tubes on such de-icer structures can expand or stretch by 40% or more during inflation cycles causing a substantial change in the profile of the de-icer (as well as thereby the leading edge) and thereby cracking ice accumulating on the leading edge. At least in part because of the large volume of air required for inflating such highly expandable tubes, the times for inflating such tubes have typically historically averaged between about 2 and about 6 seconds. The distortion engendered in an aerofoil profile by inflation of the tubes can substantially alter the airflow pattern over the aerofoil and can adversely effect lift characteristics of the aerofoil.

The rubber or rubber like materials forming these conventional pneumatic de-icers typically are possessed of a modulus of elasticity of approximately 6900 kPa. Ice, as is well known, is possessed of an elastic modulus enabling typical ice accumulations to adjust to minor changes in contours of surfaces supporting such ice accumulations. The modulus of elasticity for ice is variously reported as being between about 275,000 kPa and about 3,450,000 kpa. The modulus of elasticity of rubber compounds used in conventional de-icers however is substantially different from the modulus of elasticity typically associated with ice accumulations, and the large, 40% or greater expansion undergone by the de-icer during inflation traditionally has functioned to crack or rupture the structure of the ice accumulations thereon allowing such accumulations to be swept away by impinging wind streams.

Ice accumulations, in conforming to minor alterations in the contours of surfaces supporting the ice accumulations do so only somewhat slowly. The phenomenon by which ice accumulations conform to changing contours of support surfaces in some ways may resemble the phenomenon of cold flow in thermoplastic materials. Where the ice accumulations are exposed to extremely rapid but minor deformations, an ice coating cannot accommodate such contour changes sufficiently rapidly and shatters as though struck with a hammer. More recently, it has been discovered that subjecting leading edges of a wing or a stabilizer to electromechanical induced hammering, such as is shown by US-A-3,549,964, can assist in removing accumulations of ice on the leading edge. Concern respecting the susceptibility of such leading edges to stress fatigue upon being hammered over extended periods of time as yet have functioned in part to preclude substantial commercial development of such electromechanical hammering schemes.

A means for de-icing a leading edge not requiring the application of electrothermal de-icers and/or not requiring the application of pneumatic de-icers which, during the inflated state, substantially distort the leading edge profile for an extended period of time thereby interfering with the efficient performance of a device associated with the leading edge could find substantial application in industry. Additionally, where such a means for de-icing a leading edge does not pose a significant likelihood for long term structural damage associated with stress or fatigue such as may be associated with electromechanical hammering, such a de-icing means could find substantial commercial utility.

The present invention provides a method and an apparatus for de-icing ice accreting surfaces and finds particular utility in the de-icing of aerofoil leading edges, struts and the like associated with aircraft.

EP-A-0 235 542, which is not prepublished and was filed prior to the present application and thus is considered to be comprised in the state of the art according to Articles 54(3) and (4) EPC for the contracting states DE, FR, GB, discloses a de-icer which includes a sheet-like skin possessed of a substantially elevated modulus and formed into a desired configuration having an ice accreting surface associated therewith. The de-icer further includes a support surface separate and apart from the skin and positioned obversely with respect to the ice accreting surface.

A principal inflation tube is positioned between the support surface and the skin. A means is provided for introducing a fluid under pressure into the principal inflation tube in a quantity sufficient to inflate the principal inflation tube to a desired extent at which desired deformation of the skin occurs to a degree sufficient to detach and then dislodge or expel ice accumulations upon the ice accreting surface into a stream of fluid flowing over the ice accreting surface. Yet inflation is not accomplished to an extent sufficient to exceed a stress level characterizing an endurance limit for the material forming the skin. A means is provided for subsequently deflating the principal inflation tube.

In the apparatus according to the invention it is novel that the means for introducing the fluid under pressure into the principal inflation tube perform the introduction either at a rate and in a quantity sufficient to slowly inflate the principal inflation tube in a period of 0.5 to 5 seconds to a desired extent sufficient to cause deformation to the skin to a degree sufficient to detach ice accumulations thereon and dislodge the ice accumulations into a stream of fluid flowing over the ice accreting surface without exceeding a stress level corresponding to an endurance limit associated with the material forming the skin or in a rapid series of pulses and in a quantity sufficient to inflate the inflation tube to a desired extent at which a desired deformation occurs to the skin to a degree sufficient to detach ice accumulation thereon and dislodge the ice accumulations into a stream of fluid flowing over the ice accreting surface without exceeding a stress level corresponding to the endurance limit associated with the material forming the skin.

The de-icer of the invention may include a plurality of additional inflation tubes positioned between the support surface and the skin and configured, likewise, for inflation to an extent sufficient to deform the skin to a degree sufficient to dislodge ice accumulations upon the ice accreting surface thereover without exceeding stress endurance limit for the material from which the skin is formed.

In the practice of the invention, the principal inflation tube or tubes typically are formed from at least one ply of a fabric coated on at least one surface with a rubberizing or plasticizing compound, and formed and vulcanizably cured or thermoplastically molded as is appropriate to define the principal inflation tube. Typically, any principal inflation tube is affixed to the support surface.

In the practice of the invention, it may be desirable to include a ply positioned intermediate the skin and the support surface to lie between the principal inflation tube and the skin. The additional inflation tubes may be attached to this intermediate ply and configured to lie either between the intermediate ply and the skin or between the intermediate ply and the support surface.

In the practice of the invention, it may be desirable to interconnect the principal inflation tube or tubes with the additional inflation tubes whereby a fluid under pressure employed to inflate the principal inflation tube can thereafter pass into and be employed to inflate the additional inflation tubes. In the practice of the invention, it may be desirable to inflate the principal inflation tube(s) to the desired extent within not more than 0.25 seconds. Where the principal inflation tube(s) are joined to the additional inflation tubes for inflation of the additional inflation tubes employing the fluid under pressure used to inflate the principal inflation tube(s), following inflation of the principal inflation tube within the 0.25 seconds, the additional inflation tubes typically become inflated more slowly and can function thereby to partially de-pressurize the principal inflation tube(s) if desired.

In certain preferred embodiments a pulse of fluid partially inflates the principal tube(s) causing the high modulus skin to dislocate and then stop suddenly. Momentum imparted to the ice accumulations thereby causes additional ice movement which assists in ice detachment and dislodgment. Additional further inflation in staged pulses can further enhance effective ice removal. Use of a valve for inflation characterized by a chattering mode of operation can be effective in achieving such a "start-stop" inflation pattern.

Typically, the skin is an outer skin defining a leading edge of an aerofoil such as an aircraft wing, aileron, propeller, rotating wing such as a helicopter rotor or tail rotor. The skin preferably is formed of titanium, aluminum, steel, including stainless steels, high modulus polymers, and elevated modulus polymeric composites, all elevated modulus materials.

In the method of EP-A-0 235 542, a principal inflatable tubular structure is periodically inflated and deflated in a cavity between the skin and the support surface for the principal inflatable tubular structure. Inflation is accomplished employing a fluid under pressure. The inflatable tubular structure is pressurized to a sufficient extent to detach and dislodge accreted ice but insufficiently pressurized whereby stresses placed upon the skin do not exceed an endurance limit for the material from which the skin is formed.

In the method according to the invention it is novel that the inflation is either carried out slowly in 0.5 to 5 seconds or using a rapid series of pulses.

In preferred embodiments of the invention a pair of principal tubular structures are inflated between the support surface and the skin, the principal tubular structures being spaced apart one from the next to an extent sufficient to assure that upon inflation, bending distortion of the skin by reason of such inflation does not exceed a microstrain characterizing a substantial likelihood of fatigue failure for the skin within a million inflation/deflation cycles of the tubes.

Preferably, an additional plurality of tubes between the support surface and the skin are inflated in coordinated manner with the principal inflation tube to produce a distortion of the skin thereover sufficient to detach and dislodge accumulations of ice thereon. In certain preferred embodiments of the invention, the inflatable tubular structures are inflated within not more than about 0.10 seconds and preferably not more than about 0.50 milliseconds. Pulsating inflation is contemplated as within the purview of the invention.

The above and other features and advantages of the invention will become more apparent when considered in light of a description of a preferred embodiment of the invention together with drawings which follows forming a part of the specification.

Figure 1 is a side elevational view of an aircraft wing incorporating a de-icer in accordance with the invention.

Figure 2 is a control schematic for controlling activation of de-icers in de-icing a surface in accordance with the instant invention.

Figure 3 is a depiction of an alternate de-icer tube configuration for use in the wing of Figure 1.

Figure 4 is a cross-sectional representation of an alternate embodiment of a de-icer in accordance with the invention.

Figure 5 is a schematic of an inflation tube arrangement.

Figure 6 is an alternate of an inflation tube arrangement.

The present invention provides an apparatus for de-icing a leading edge surface. By "de-icing" what is meant is the removal of ice subsequent to formation of the ice upon the leading edge. By "leading edge" what is meant is that portion of a surface of a structure which functions to meet and in substantial measure break, an airstream impinging upon the structure. Examples of leading edges would be forward edge portions of wings, stabilizers, struts, nacelles, propellers, rotating wings such as helicopter rotors, tail rotors and other housings, objects and protrusions first impacted by an airstream flowing over an aircraft in flight as well as spars, struts and other structural elements of marine vessels, towers and buildings.

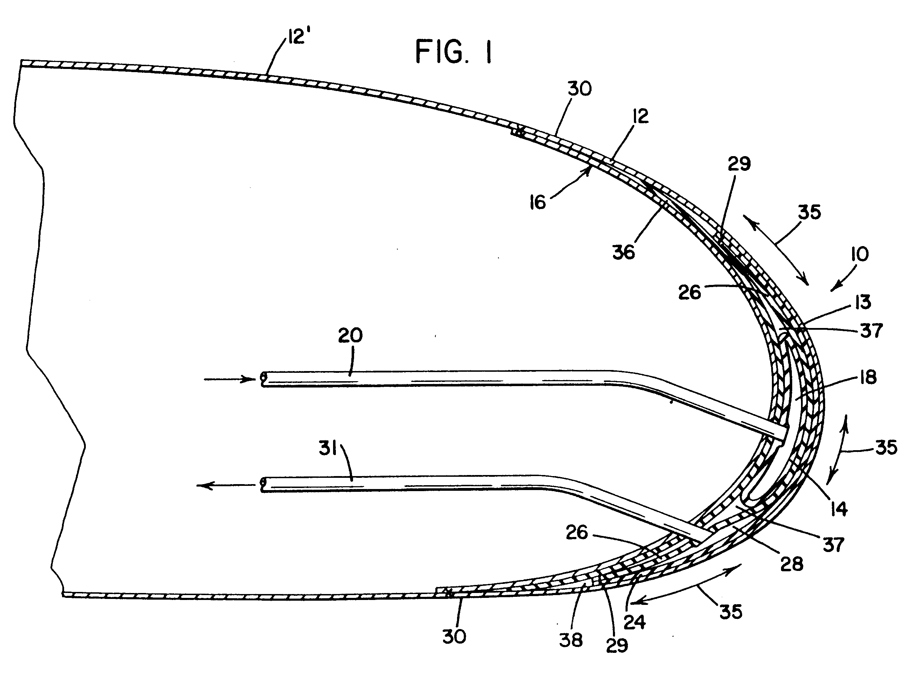

Referring to the drawings, Figure 1 depicts one embodiment of an aircraft wing leading edge de-icer 10 in accordance with the invention.

The de-icer 10 includes an outer layer or skin 12 formed of a substantially rigid material such as a plastic or metal having a substantially elevated modulus of elasticity or so-called Young's modulus. This modulus of elasticity should be at least 40,000 kpa. Preferably this modulus of elasticity approaches or exceeds the modulus of elasticity associated with ice accumulating upon the leading edge, so that preferably this modulus of elasticity is at least 275,000 kPa. In most preferred embodiments it is believed that this modulus of elasticity may extend to encompass about 7,500,000 kPa or greater.

A principal inflatable member 14 and a support surface 16 are provided with the principal inflatable member 14 typically being affixed by adhesion or other suitable or conventional means to the support surface 16. It should be apparent that the outer skin 12 can be formed as part and parcel of an aircraft skin 12' defining the outer contour of the wing, can be attached to the aircraft skin 12', or can be separately attached to the aircraft with the support surface 16 instead being part and parcel of the aircraft skin 12'. In the embodiment of Figure 1, the de-icer skin 12 is shown as part and parcel, that is a continuation of, the aircraft skin 12'.

The principal inflatable member 14 is a tube-like structure typically running the length of the de-icer 10 and formed of a fabric material coated on at least one surface with a rubberizing or plasticizing compound. The tube 14 is formed so that the surface coated with the rubberizing or plasticizing compound faces outwardly from the center of the inflatable member 14 and therefore defines inflation chamber or cavity 18 within the tubular member 14. Suitable materials and techniques for the forming of tubular members from rubberized or plasticized fabric are known in the art of rubberized and plasticized fabric working. An inflation conduit 20 is provided fluid communication with the inflation chamber 18 in suitable or conventional manner.

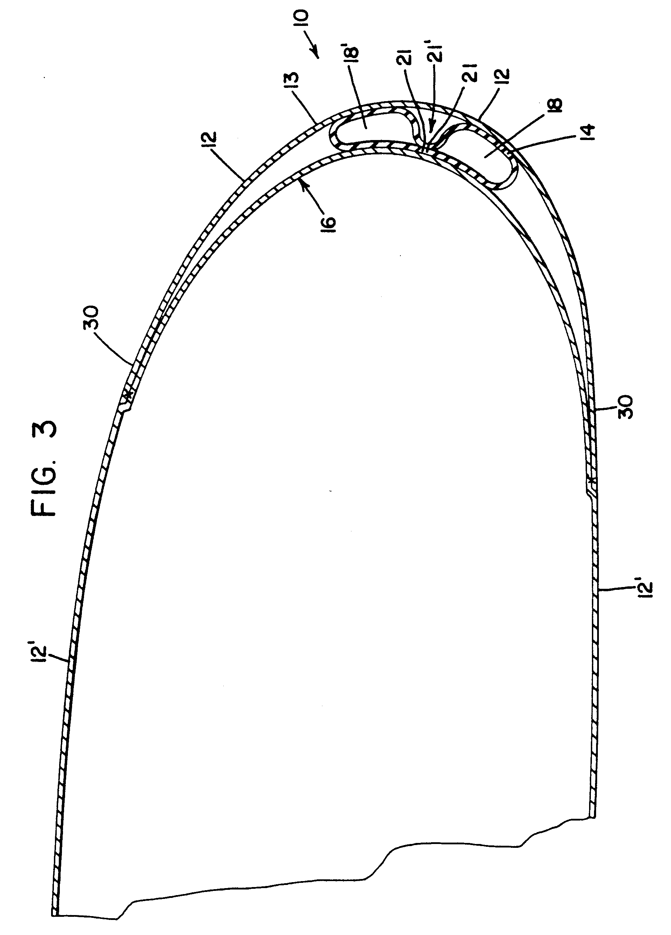

Only a single principal inflation member 14 is depicted in Figure 1. It should be understood that a plurality of principal inflation members or a plurality of chambers within a single principal inflation member 14 may be positioned between the outer skin 12 and the support surface 16 and configured for inducing distortion of the outer skin upon inflation. As shown in Figure 3 for example, the inflation tube 14 can be stitched to provide a pair of parallel inflation chambers 18, 18' with fluid communication therebetween via the stitching. Where the stitching is sealed or an adhesive or chemical bond is substituted for the stitching a pair of parallel inflation tubes result.

Referring again to Figure 1, an upper intermediary ply 24 and a lower intermediary ply 26 are positioned beneath the skin 12. These plies 24, 26 are suitably formed of a fabric material coated on one surface with a rubberizing or plasticizing coating compound in well-known manner. In the upper intermediate ply 24, the rubberizing or plasticizing coating faces in a direction outwardly towards the skin 12 and the ply 24 is bonded to the skin 12. In the lower intermediate ply 26, the rubberizing or plasticizing coating compound faces in a direction inwardly away from the skin whereby the uncoated fabric or sides or surfaces of the intermediate piles 24, 26 cooperate to define an interstitial space 28 between the plies 24, 26.

The fabric employed in the intermediate piles 24, 26 may be of any suitable or conventional nature. Preferably a rayon, polyester, aramid, nylon or acrylic fiber-based fabric is employed. The rubberizing or plasticizing compound can be of any suitable or conventional nature such as natural, synthetic, styrene-butadiene or chloroprene rubbers and plasticizing thermoplastic or plasticizing thermosetting resins as these terms are known in the art and useful mixtures thereof, all as suitable for bonding to the outer skin 12 or to other structural components of the de-icer 10. Appropriate rubberizing compounds and plasticizing compounds are well-known in the rubber and/or plastic compounding field.

The plies 24, 26 may be joined by mechanical or chemical attachment such as by heat sealing, chemical bonding, adhesives, or, as shown by the drawing in Figure 1, by stitching 29 adjacent at least one trailing edge 30 of the de-icer.

Optionally, a bonding ply 36 is provided and the principal inflation member 14 is affixed to the bonding ply 36. Affixation can be accomplished by adhesion, vulcanized bonding, or other suitable or conventional method. The bonding ply 36 typically is formed from rubber or a rubber-like material such as a plasticizing compound that may include a fabric reinforcement, the rubber or rubber-like material being selected as suitable for bonding to the support surface 16. Suitable or conventional rubber or rubber-like plasticizing materials are well-known in the art and the selection of a particular compound or fabric material typically is predicated upon a number of factors which may include the nature of the support layer 16 to which the bonding ply 36 is affixed, and the relative cost and availability of various fabrics and of natural and synthetic rubbers or plasticizing rubber-like agents. Chloroprenes such as NEOPRENE® (duPont) and nitrile rubbers are preferred as bonding ply 36 rubber materials.

The principal inflatable member 14 is of a size and shape such that when inflated to a desired pressure, typically between about 69 and 276 kPa, the outer skin 12 is deformed above the tubular member to an extent of not more than about 0.5 centimeters and preferably not more than approximately 0.25 centimeters. The actual distortion required is in part a function of the physical configuration for de-icer 10 and the nature of ice deposits formed thereon. Typically such distortions are desirable in a range of between 0.1 and 0.35 centimeters. By deformed or distorted what is meant is movement of a point on the de-icer 10 outer skin 12 from a physical location while the principal inflation tube is placid to a physical location once the principal inflation tube has been inflated to the desired extent and pressure.

Distortion of the outer skin pursuant to inflation of the principal tubular member 14 produces chordwise strain depicted in Figure 1 by lines 35 in the outer skin 12. This distortion and the accompanying chordwise strain eventually reaches a point where stresses develop at the interface between ice and the outer skin 12 which stresses serve to break the adhesive bond of the ice to the skin thereby detaching the ice, and develop cohesive fractures in the ice itself due, it is believed, to an inability of the ice to accommodate rapidly strain to the extent of the rapidly induced strain in the skin 12 to which the ice is attached. At the same time the inflation action produces a distortion motion in the skin 12 and ice and momentum thereby is applied to the ice. As the skin stops moving when inflation is completed, the ice momentum functions to dislodge and eject the detached ice from the skin 12.

Where inflation is accomplished slowly, insufficient momentum may not be imparted to the ice to secure dislodgment or ejectment of the detached ice absent the existence of additional forces. Such forces can include centrifugal force associated with motion of propellers or rotating wings and tail rotors or distortional turbulence in an airstream impinging the leading edge.

The use of step-off filets 37, 38 may be desirable in assuring a uniformly smooth profile for the de-icer 10 as depicted in Figure 1.

The chordwise strain depicted by the lines 35 in Figure 1 imparts a certain, very limited stretching motion in the outer-de-icer skin 12. Stretching in the outer skin 12 is limited because, unlike conventional pneumatic de-icers, the outer skin is possessed of a high modulus elasticity. High modulus considerations are not important with respect to the rubberized intermediate plies 24, 26, if used, and the bonding ply 36, if present, which are intended to be substantially low modulus. Modulus considerations are very important however for the outer skin 12 and typically are important for the support layer 16 which are both intended to be formed of material having a substantially high modulus. Accordingly, the outer skin is formed of a substantially high modulus material having an ultimate elongation necessarily greater than that of the ice accumulations preferably greater than about 1/4% and most preferably greater than about 1/2%. By ultimate elongation what is meant is the percentage of permanent deformation remaining after tensile rupture. The operational elongation to which the outer skin 12 is subjected, that is elongation strain associated with routine, ordinary operation of the de-icer, as a result of chordwise strain represented by the lines 35 in Figure 1 should be comfortably less than the ultimate elongation inherent to the material forming the outer skin 12 defining the outer surface of the de-ice. Where the operational elongation exceeds the ultimate elongation, premature and potentially catastrophic failure of the outer skin 12 may occur. Equally important, the operational elongation should not induce or effect a strain as depicted by the lines 35 in excess of a strain associated with early fatigue failure of the material forming the skin, again to avoid premature and possibility catastrophic failure.

Likewise, the support ply 16 or layer must be formed of substantially high modulus materials to assure against detrimental or deleterious deformation of the support ply during inflation of the principal inflation tube 14 and leading therefore to a failure to adequately strain the outer skin 12.

The outer skin 12 may be formed from suitable or conventional materials such as metals or plastics. Thin sheets of stainless steel, annealed stainless steel, thin sheets of titanium or annealed titanium and to a lesser extent aluminum are of great utility in the practice of the invention as having a very desirable Young's modulus. Plastics having the characteristic of a high modulus of elasticity or Young's modulus and a suitable ultimate elongation find utility in forming an outer skin.

By "thin" what is meant is 0.00254 to about 0.0254 centimeters for metals and 0.008 centimeters to 0.0508 for non metals. One plastic material finding particular use in the practice of the invention is polyetheretherketone (Peek) available from ICI. Other suitable or conventional plastic material such as polycarbonates, acetals, nylons, polyesters, polyvinyl fluorides, polyethylenes, epoxy resins formed into composites as well as phenolic resins formed into composites and the like can be employed in the practice of the instant invention. Such materials will possess an ultimate elongation greater than about 3.0% and preferably greater than about 5.0% and an elastic modulus or Youngs modulus of at least about 40,000 kPa and preferably at least about 275,000 kPa but up to about 7,500,000 kPa or more. The use of certain polymeric materials in lieu of metals in forming the skin 12 may be advantageous due to a lower tendency for ice to adhere to such polymeric materials. The outer skin 12 of the de-icer 10 can define a structural leading edge, thus performing a dual role.

While it had previously been a generally accepted postulation that high modulus materials must by their nature require de-icing employing an extremely rapid deformation, it is a feature and advantage of the present invention that deformation can be accomplished at a more measured pace. Accordingly, and surprisingly, inflation rates or times characterizing priorly known highly elastic pneumatic de-icers mounted upon ice accreting surfaces of wings can also be employed with respect to the principal inflation tube 14 associated with the instant invention. As though the principal inflation tube 14 may inflate over a period of time as long as between about one and about five seconds. Nonetheless and notwithstanding relatively slow but full inflation of the principal inflation tube 14, the strain placed thereby upon the skin 12 is sufficient to detach and assist in dislodging ice accumulations thereon notwithstanding and substantially elevated modulus of elasticity associated with the skin 12. The presence of additional forces such as rotational motion of the leading edge or turbulent disturbances in the airstream flowing over the leading edge may be required to assure a complete dislodging of all ice so detached. These results would appear to be contrary to all the prior teachings in the art with respect to de-icing as a function of gradual deformation of an ice accreting surface.

In the practice of the invention, it is of course equally possible that the principal inflation tube can be inflated in such a manner that deformation of the outer skin 12 to a degree sufficient to discharge ice accumulations thereon can be accomplished in less than the about one to five seconds associated with ordinary pneumatic de-icers, more particularly in less than 0.10 seconds, preferably less than 50 milliseconds, and most preferably less than 20 milliseconds. Pulsating inflation has been particularly effective where shorter inflation times are employed. Particularly where centrifugal or turbulent airflow forces, for example, are available, it is not essential that inflation of the principal inflation tube 14 to the desired extent to effect detachment and discharge of ice upon the skin 12 be accomplished in less than the time ordinarily associated with the inflation and deflation cycle of a conventional pneumatic de-icer. While both rapid and more leisurely inflation cycles can function to remove ice accumulations of a thickness of 0.6 centimeters or less, it has been found that ice accumulations of less 0.05 can, surprisingly, be effectively removed by a relatively slower inflation/deflation cycle for the principal inflation tube 14 much akin to the more rapid inflation mode where the inflation tube is inflated to a desired extent in a relatively short period of time such as less than 0.10 seconds, preferably less than 50 milliseconds or most preferably less than 20 milliseconds. While such very short inflation/deflation cycles can function to, in the vernacular, blast rather thick ice accumulations form the outer skin 12, it has been found that a slower inflation/deflation cycle may be under many circumstances, as effective in removing very thin ice layers. Such removal is particularly advantageous where additional forces are present such as in conjunction with propeller or rotating wing de-icing.

Where the principal tubular member 14 as shown in Figure 1 is inflated employing a fluid under pressure at rates more characteristic of conventional de-icers, that is 0.50-5 seconds, the pressurizing fluid can be introduced in a suitable or conventional manner. Typically, pressurized fluid is introduced along a conduit 20 in well-known manner to the principal inflation tube 14. Where a source of fluid, such as air, under pressure is employed via the conduit 20 to inflate the tubular inflation chamber 18, the source of fluid under pressure can be regulated to provide a fluid pressure not greater than that necessary to achieve a desired degree of inflation to effectively remove accumulations of ice from a surface 13 of the de-icer 10. For rapid inflation modes, preferably a source of fluid under pressure greater than the pressure normally associated with desired full and final inflation of the principal tubular member 14 can be employed. Where such higher pressure fluid sources are employed, it is typically advantageous to include a positive means for preventing over-inflation/pressurization of the principal tubular member 14 thereby forestalling structural damage to the support surface 16 and the outer skin 12. Fluid under pressure can be provided in any suitable or conventional manner such as by an air compressor (not shown) or compressed gas cylinder (not shown) aboard an aircraft. Alternately, air at low pressure suitable for inflating the principal tubular member 14 of the instant invention at 0.5-5 second rates can be obtained employing a bypass bleed from one or more compressor stages associated with a turbine engine aboard an aircraft.

In the embodiment of Figure 1 it may be desirable to provide a conduit 31 by which interstitial pressure within the cavity 28 can be bled. Such a bleed provision assists in assuring against a build up of pressure between the outer skin 12 and the support surface 16 that might otherwise interfere with desirably full inflation of the principal tubular member 14. It may be desirable to join the conduit 31 to a source of vacuum whereby the interstitial space can be maintained under vacuum.

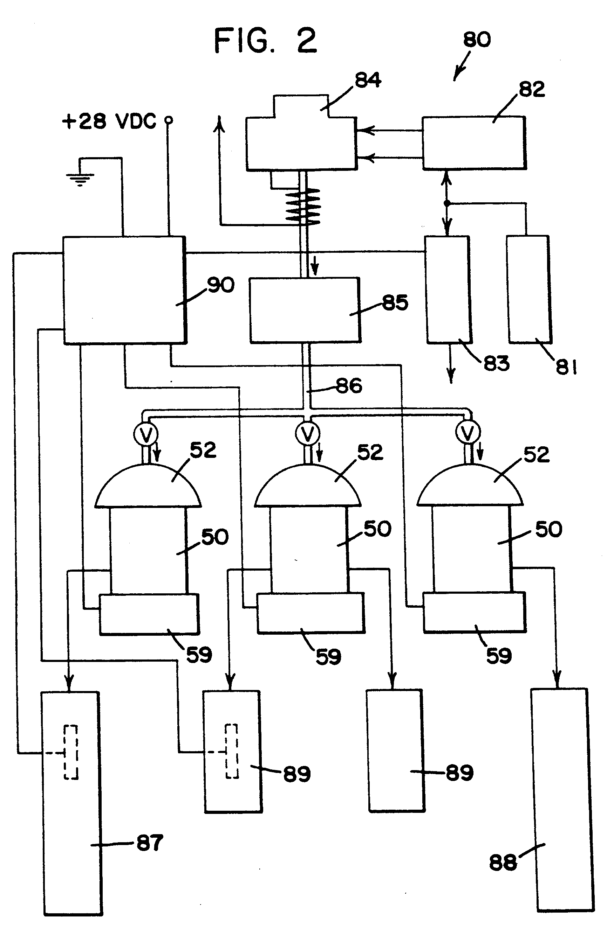

In the event it is desired that the tubular inflation chamber 14 be inflated quite rapidly, that is in less than about a second and preferably less than about 0.10 seconds, rapid inflation can be accomplished employing a source of high pressure air and a control schematic as shown in Figure 2. Referring to the drawings, Figure 2 depicts a schematic for a system 80 in accordance with the invention for de-icing wings and horizontal stabilizers of an aircraft. The system 80 includes a source 81 of low pressure air such as a compressor or a bleed from a jet engine turbine stage. The source 81 is joined to regulators 82, 83 for assuring a constant supply pressure of the low pressure air source. The regulator 83 is configured to supply low pressure air to an ejector; the regulator 82 is configured to supply an intensifier 84.

High pressure air in the main accumulator 85 is available through suitable conduits 86 to accumulators 50 associated with pilot valves 52. The high pressure air from the accumulator 50 is then made available to individual wing and stabilizer de-icers 87, 88, 89 having principal inflatable members 14 such as are depicted in Figure 1.

A control device 90 functions to control the activation of the solenoids 59 associated with the pilot operated valve 52 whereby timed release of high pressure air to the principal inflatable members 14 of the de-icers 87, 88, 89 can be accomplished. Such control can be accomplished in well-known fashion.

It should be understood that the system 80 depicted in Figure 2 is exemplary only, and that various modifications and alterations may be made thereto in accommodating particular de-icer configurations and the physical valving configurations necessary to supply fluid under pressure thereto. In particular, the low pressure source 81 of air can be replaced by a high pressure source of air such as from a compressor (not shown) or a storage gas bottle (not shown) whereupon the intensifier 84 may become superfluous. Also, the vacuum regulator 83 and the regulator 82 may consist of a single unit supplying low pressure air for vacuum production and for intensification.

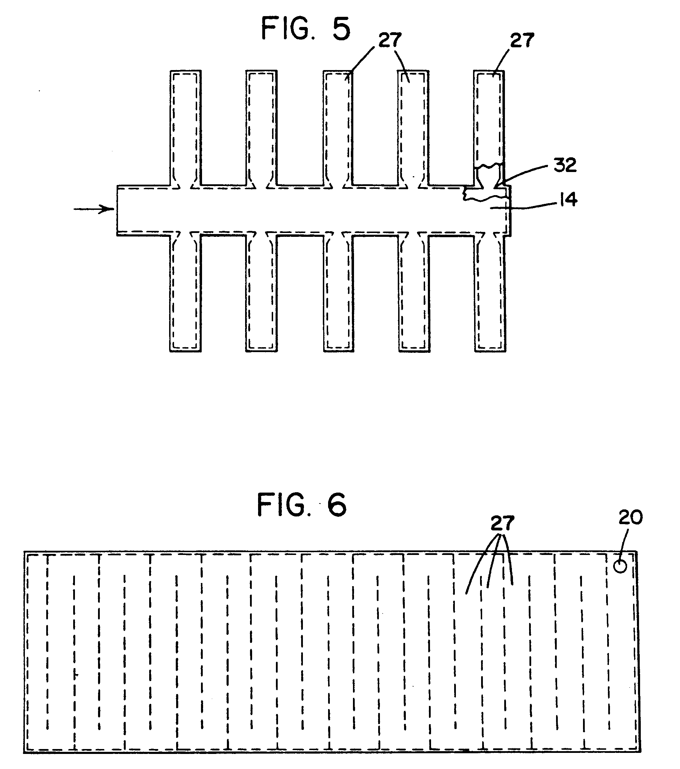

Referring to the drawings, Figure 3 depicts a preferred alternate embodiment of the instant invention wherein the skin portion 12′ of the aircraft does not surround the inflation tube 14 in defining the outer skin 12 and wherein the support surface 16, in contrast to Figure 1, is a continuation of the structure of the skin portion 12′. No intermediate plies 24, 26 are employed in the embodiment depicted in Figure 5 and the inflation tube 14 is adhered to the support surface 16 in suitable or conventional manner such as by adhesive techniques.

In the embodiment of Figure 3, the principal inflation tube 14 is subdivided by stitching 21 to form a pair of parallel tubular chambers 18, 18′. The stitching is of a sufficient breadth to define a stitch zone 21′ whereby upon inflation of the chambers 18, 18′ bending stresses in the skin 12 immediately above the stitch zone 21′ engendered by reason of inflation of the chambers 18, 18′ does not exceed an endurance limit for the material from which the skin 12 is formed. The stitch zone 21′ establishing a spacing between the tubes 18, 18′ will of course vary depending in part upon the material forming the skin 12 since various skin materials will have various endurance limits. The stitching 21 equally could be a zone of adhesion or chemical bonding.

By "endurance limit" what is meant is a capability for withstanding at least a million cycles of inflation/deflation of the tubular inflation chambers 18, 18' without significant risk of a brittle or a stress fracture or yielding in the skin 12. The identification of an endurance limit for a particular material and the determination of bending stresses engendered by a particular spacing of the tubular inflation chambers 18, 18' is within the purview of the skill and knowledge of one familiar with the art of strength of materials.

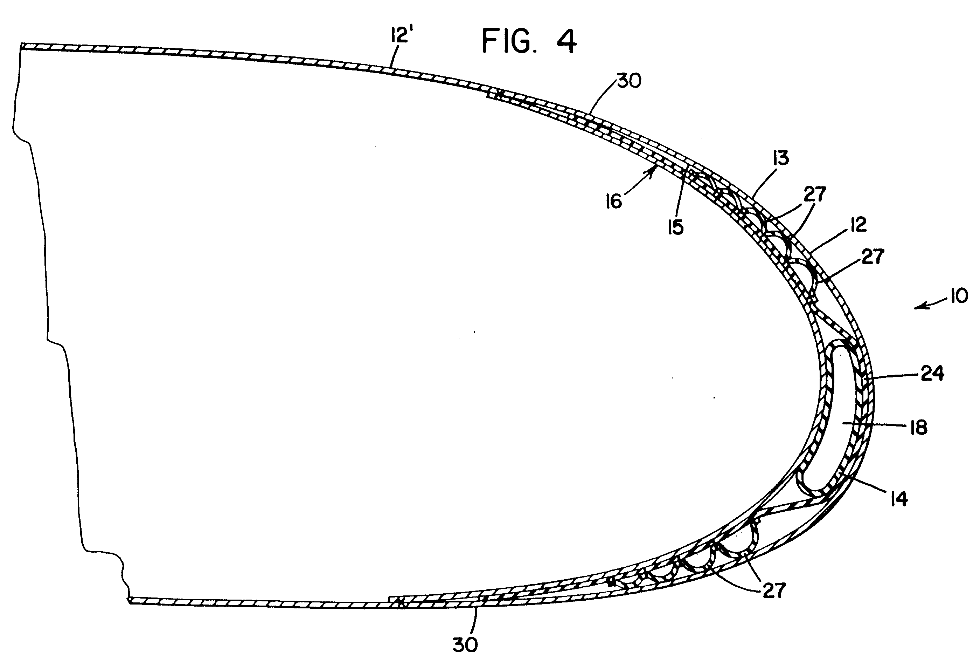

Referring to the drawings, Figure 4, is a depiction of a further preferred embodiment of the invention wherein an aircraft leading edge is shown in cross-section having a de-icer outer skin 12 having an ice accreting surface 13, an obverse surface 15, and a support surface or layer 16 supporting a principal inflation tube 14 having an inflation chamber 18. An intermediate ply 24 lies between the support surface 16 and the obverse surface 15 of the skin 12. No intermediate ply 26 is employed in the embodiment of Figure 4. The principal inflation tube 14 lies between the intermediate ply 24 and the support surface 16.

In Figure 4 a plurality of additional inflation tubes or tubular members 27 are provided between the intermediate ply 24 and the obverse surface 15. The additional tubular members 27 are configured to, upon inflation, exert de-icing stresses upon the outer skin 12 immediately thereover. The additional tubular members 27 can be of any suitable or conventional nature and typically are formed in a manner similar to the inflation tube 14.

Referring to Figure 4, it should be apparent that the additional tubular members 27 need not lie between the intermediate ply 24 and the skin 12 obverse surface 15, but rather could lie between the support surface 16 and the intermediate ply 24. It should be apparent that the intermediate ply 24, depending upon the desired configuration, may not be necessary, and therefore both the principal tubular member 14 and the additional tubular members 27 can lie or be positioned or affixed upon the support surface 16 for direct contact and interaction with the outer skin 12 obverse surface 15.

Referring again to the drawings, Figure 5 is a representation of a means suitable for inflating the additional tubular members 27. The additional tubular members 27 are configured in fluid communication with the principal inflatable principal tubular member 14 whereby fluid inflating the tubular member 14 can thereafter fill and inflate the additional tubular members 27. Where it is desired that fluid under an elevated pressure be employed to inflate the principal inflatable tubular member 14, it is desirable that the passageway 32 for each additional tubular member 27 be configured to restrict the flow of fluid into the additional inflatable tubular members 27 so that the principal inflation tube 14 can inflate virtually instantaneously with a pressure "snap" prior to significant inflation of the additional tubular members 27. The sizing of a particular restricted passageway 32 is within the purview of one skilled in the art of fluid dynamics.

Referring to Figure 5, it should be readily apparent that the additional inflatable tubular members 27 need not be inflated employing fluid derived from a filling of the principal inflatable tubular member 14. Referring to Figure 6 the additional inflatable tubular members 27 can be each inflated employing the source of fluid under pressure through a separate inflation conduit 20 in well-known manner or may be joined to a header (not shown) supplied with fluid under pressure from a source thereof also in well-known manner. The selection of a particular means for inflating the additional tubes 27 is at least in part a function of weight considerations, orientation of the additional tubes 27 with respect to the principal inflation tube 14 (that is whether generally paralleling or lying generally perpendicular to the principal inflation tube), and the nature and manner in which the principal inflation tube 14 is to be inflated as well as the sequence, if any, in which the principal inflatable tubular member 14 and the additional inflatable tubular members 27 are to be inflated.

In operation, the de-icer of the invention is inflated and deflated in a cyclical manner to remove ice accumulation on the ice accreting surface 13. Where only a single principal inflatable tubular member 14 is employed, the principal inflatable tubular member 14 is alternately inflated and deflated to cause distortion to the outer skin 12 sufficient to remove ice accumulation on the ice accreting surface 13 thereof without exceeding an endurance limitation for the material from which the outer skin is formed. Typically, a time-period often many times longer than the inflation/deflation cycle for the principal inflatable tubular member 14 is provided between discrete inflation periods for the principal inflatable tubular member 14. In other embodiments, it may be desirable alternately to inflate and deflate the principal inflatable tubular member 14 virtually continuously or to inflate the principal inflatable member 14 in small spurts or surges. Generally the longer the time period between inflation cycles for the principal tubular member 14, the greater an ice accumulation thickness developing upon an ice accreting surface 13 and requiring removal. Of course with greater ice accumulation thicknesses generally goes a greater interference with efficient aerofoil performance.

Where additional inflatable tubular members 27 are employed, these additional inflatable tubular members 27 may be inflated concurrently with the principal inflatable tubular member(s) 14, may by the use appropriate restricting passageways 32, be inflated slightly subsequently to inflation of the principal inflatable tubular member(s) 14, or further alternately may be inflated separately from the principal inflatable tubular member 14 optionally on an inflation cycle wholly different from that characterizing the principal inflatable tubular member 14. Typically, where the members 14, 27 are inflated in a coordinated manner, the principal inflatable tubular member 14 is inflated first and then either deflated, or maintained in an inflated or partially inflated state while the additional tubular members 27 are subsequently inflated and then deflated. The particular cycle of inflation/deflation for all the members 14, 27 will to some extent be a function of the nature of the aerofoil or other surface being de-iced and the nature and extent of stress that can be accommodated by a particular material of construction forming the skin 12 and defining the ice accreting surface 13.

Where it is desired that the principal inflatable tubular member 14 be inflated extremely rapidly, that is in less than 0.10 seconds and more preferably in less than 0.50 milliseconds, it may be particularly advantageous to employ the interconnected additional tubes shown in Figure 5 together with the restricted passageway 32 shown in Figure 5 to effect inflation of additional tubular members 27. It should be apparent, that in Figure 5 the principal inflatable tubular member 14 is configured for chordwise orientation of the tubular members 27. By chordwise orientation, what is meant is a manner generally perpendicular to an orientation of the principal inflatable tubular members 14 where the principal inflatable tubular members 14 parallels in spanwise manner the leading edge of an aerodynamic structure such as a wing, strut or an aileron surface.

Referring to the drawings, Figure 6 shows an alternate pattern for chordwise orientation of additional inflatable tubular members 27 wherein an essentially continuous single tube forms an essentially chordwise pattern. Fluid under pressure for inflating the additional inflatable tubular members 27 is provided through a conduit 20. The tubular member configuration of Figure 6 can also be used with the additional inflatable tubular members 27 oriented in a generally spanwise manner with respect to a leading edge profile.

Where it is desired that the principal inflatable member 14 be inflated in a rapid series of pulses, the use of a chattering valve can be of value.

Employing the de-icer of the instant invention, deleterious deterioration and damage of more traditional inflatable pneumatic de-icers positioned typically external upon an outer surface of the skin of an aircraft or other object to be de-iced is avoided where such deterioration or damage is engendered by reason of ultra violet radiation, damage by object strike or rain or sand erosion. The de-icer of the instant invention lies sheltered beneath an outer skin having a substantially elevated modulus and upon which ice accretes and from which accreted ice is dislodged by inflation/deflation cycles of the inflation tubes.

## Claims

1. A de-icer for de-icing an object having a sheet-like skin (12,12') including an ice accreting surface (13), the skin (12,12') being formed of a material having a modulus of elasticity of at least 40,000 kPa, comprising:
a support surface (16) positioned obversely to the ice accreting surface (13);
at least one principal inflation tube (14) positioned between the support surface (16) and the skin (12);
means for introducing a fluid under pressure into the principal inflation tube (14);
and means for subsequently deflating the principal inflation tube (14),
the means for introducing the fluid under pressure into the principal inflation tube (14) performing the introduction either
at a rate and in a quantity sufficient to slowly inflate the principal inflation tube (14) in a period of 0.5 to 5 seconds to a desired extent sufficient to cause deformation to the skin (12) to a degree sufficient to detach ice accumulations thereon and dislodge the ice accumulations into a stream of fluid flowing over the ice accreting surface (13) without exceeding a stress level corresponding to an endurance limit associated with the material forming the skin (12), or
in a rapid series of pulses and in a quantity sufficient to inflate the inflation tube (14) to a desired extent at which a desired deformation occurs to the skin (12) to a degree sufficient to detach ice accumulations thereon and dislodge the ice accumulations into a stream of fluid flowing over the ice accreting surface (13) without exceeding a stress level corresponding to an endurance limit associated with the material forming the skin (12).

2. The de-icer of claim 1 further characterized by including a plurality of additional inflation tubes (27) positioned between the support surface (16) and the skin (12) configured for inflation to an extent sufficient to deform the skin (12) immediately thereover to a degree sufficient to detach and dislodge ice accumulations upon the ice accreting surface (13) thereof without exceeding the stress endurance limit for the material from which the skin (12) is formed.

3. The de-icer of claim 1 or 2 characterized in that at least one of the principal and plurality of the additional inflation tubes (14,27) is formed from at least one ply of fabric coated on at least one surface with a rubberizing compound and vulcanizingly cured.

4. The de-icer of any of claims 1 through 3 characterized in that at least one of the inflation tubes (14,27) is affixed to the support surface.

5. The de-icer of claim 2 or 3 further characterized by including an intermediate ply (24) positioned intermediate the skin (12) and the support surface (16) to lie between the principal inflation tube (14) and the skin (12), the additional inflation tubes (27) being attached to the intermediate ply (24) and configured to lie between the intermediate ply (24) and the skin (12).

6. The de-icer of any of claims 1 through 5 including means for inflating and deflating the principal inflation tube (16) in a cyclical manner.

7. The de-icer of any of claims 1 through 6 characterized in that at least one principal inflation tube (14) includes a partitioning means dividing the principal inflation tube (14) into at least a pair of tubular compartments (18,18'), the partitioning means being configured to define the tubular compartments (18,18') in a spaced apart relationship sufficient whereby, upon inflation of the tubular structures, bending stress in the skin (12) induced by the inflation of parallel, spaced apart tubes does not exceed a bending microstrain in the material forming the skin (12) corresponding to a service life for the skin (12) and capable of accomodating at least a million cycles of inflation/deflation of the tubular structures.

8. The de-icer of any of claims 1 through 7 characterized in that the skin (12) is formed from one of titanium, aluminum, steel, including stainless steel, a plastic and a polymeric composite.

9. The de-icer of any of claims 1 through 8 characterized by further comprising:
a plurality of additional inflation tubes (27) positioned between the support surface (16) and the skin (12) and configured for inflation to an extent sufficient to deform the skin (12) to a degree sufficient to detach and dislodge ice accumulations upon the ice accreting surface (13) thereof without exceeding the stress endurance limit for the material from which skin (12) is formed and means for inflating the additional inflation tubes (27); and
means for inflating the additional inflation tubes (27) being at least one direct interconnection between the additional inflation tubes (27) and the principal inflation tube (14) configured whereby fluid employed in inflating the principal inflation tube (14) can thereafter pass into the additional inflation tubes (27) causing the inflation thereof subsequent to inflation of the principal inflation tube (14).

10. The de-icer of claim 9, the principal inflation tube (14) and additional inflation tubes (27) being affixed to the support surface (16).

11. The de-icer of any of claims 1 through 10, characterized in that the object to be de-iced is an aerofoil having an outer skin (12,12') formed of a material having a modulus of elasticity of at least 40,000 kPa, the aerofoil having a leading edge and trailing surface therefrom defined by the skin (12,12').

12. The de-icer of any of claims 9 through 11 wherein the interconnection between the additional inflation tubes (27) and the principal inflation tube (14) includes at least one restricted passageway (32).

13. The de-icer of any of claims 9 through 12 including means for fully inflating the principal inflation tube (14) in a rapid series of pulses in not more than 0.25 seconds.

14. A method for de-icing an object having a shell-like skin (12) including an ice accreting surface (13), the skin (12) being possessed of a modulus of elasticity of at least 40,000 kPa, comprising the steps of:
employing a fluid under pressure,
periodically inflating at least one principal inflatable tubular structure (14) in a cavity between the skin (12) and a support surface (16) positioned obversely to the ice accrecting surface (13) to a pressure sufficient to detach and dislodge accreted ice but insufficiently elevated whereby stresses placed upon the skin (12) do not exceed an endurance limit for the material from which the skin (12) is formed,
the inflation either being carried out slowly in 0.5 to 5 seconds, or
using a rapid series of pulses.

15. The method of claim 14 including the steps of inflating the principal inflatable tubular structure (14) in a rapid series of pulses producing a series of near instantaneous distortions of the skin (12) overlying the inflatable tubular structure (14).

16. The method of claim 14 or 15 further including the step of fully inflating the principal inflatable tubular structure (14) in a rapid series of pulses within not more than 0.25 seconds.

17. The method of any of claims 14 through 16 further characterized by the step of inflating a pair of principal inflatable tubular structures spaced apart one from the next to an extent sufficient to assure that, upon inflation, bending distortion of the skin (12) by reason of inflation does not exceed a micro strain corresponding to a substantial likelihood of fatigue failure of the skin (12) within a million inflation/deflation cycles of the tubes.

18. The method of any of claims 14 through 17 further characterized by including the step of inflating between the skin (12) and the support surface (16) a plurality of additional tubes (27) to produce a distortion of the skin (12) sufficient to detach and dislodge accumulations of ice thereon.

19. The method of any of claims 14 through 18 further characterized by inflating and deflating the principal inflatable tubular structure (14) in a cyclical manner.

20. The method of any of claims 14 through 19 characterized by further comprising the steps of:
inflating between the skin (12) and the support surface (16) subsequent to achievement of full inflation of the principal tubular structure (14) a plurality of additional tubes (27) directly connected to the principal tubular structure (14) to produce a distortion of the skin (12) sufficient to detach and dislodge accumulations of ice thereon; and
inflating the additional tubes (27) employing fluid under pressure employed for inflating the principal inflatable tubular structure (14).

21. The method of claim 20 further including the step of fully inflating the principal inflatable tubular structure (14) in a rapid series of pulses within not more than 0.10 seconds.

22. The method of any of claims 14 through 21 characterized in that the object is an airfoil having a leading edge associated therewith, the airfoil being configured to have a skin (12) having an ice accreting surface (13) and formed of a material having a modulus of elasticity of at least 40,000 kPa, the inflatable tube (14) extending spanwise along the leading edge and further comprising the steps of:
subsequently inflating employing the fluid under pressure utilized in inflating the spanwise inflation tube (14), a plurality of additional inflation tubes (27) positioned in one of a chordwise and spanwise relationship to the leading edge and positioned between the support surface (16) and the skin (12); the inflation tube (14) and the additional inflation tubes (27) being directly connected for fluid flow therebetween, the inflation tube (14) and the additional inflation tubes (27) being inflated to an extent sufficient to produce a desired deformation in the skin (12) sufficient to detach and dislodge ice accumulations on the ice accreting surface (13) thereof into an airstream flowing over the airfoil but to an extent insufficient to exceed a stress level associated with an endurance limit for the material forming the skin (12).

23. The method of claim 22 including the step of pulsatingly inflating the spanwise inflation tube (14).

## Patentansprüche

1. Enteisungsvorrichtung zum Enteisen eines Objekts mit einer bahnartigen Haut (12,12') mit einer eisansammelnden Oberfläche (13), wobei die Haut (12,12') aus einem Material mit einem Elastizitätsmodul von wenigstens 40.000 kPa besteht, mit:
einer der eisansammelnden Oberfläche (13) abgewandten Stützfläche (16);
wenigstens einem zwischen der Stützfläche (16) und der Haut (12) angeordneten Hauptaufblasrohr (14);
einer Einrichtung zum Einführen eines Fluids unter Druck in das Hauptaufblasrohr (14);
und einer Einrichtung zum anschließenden Entleeren des Hauptaufblasrohrs (14),
wobei die Einrichtung zum Einführen des Fluids unter Druck in das Hauptaufblasrohr (14) die Einführung entweder
mit einer Rate und einer Menge durchführt, die ausreicht, um das Hauptaufblasrohr (14) in einem Zeitraum von 0,5 bis 5 Sekunden bis zu einem gewünschten Ausmaß langsam aufzublasen, um eine Verformung der Haut (12) bis zu einem Grad zu bewirken, der ausreichend ist, darauf befindliche Eisablagerungen zu lösen und die Eisablagerungen in einen über die eisansammelnde Oberfläche (13) strömenden Fluidstrom zu entfernen, ohne ein Spannungsniveau zu überschreiten, das der Dauerfestigkeitsgrenze des die Haut (12) bildenden Materials entspricht, oder
in einer raschen Abfolge von Impulsen und in einer Menge durchführt, die ausreichend ist, das Aufblasrohr (14) zu einem gewünschten Ausmaß aufzublasen, bei dem an der Haut (12) eine gewünschte Verformung bis zu einem Grad auftritt, der ausreicht, die darauf befindlichen Eisablagerungen zu lösen und die Eisablagerungen in einen über die eisansammelnde Oberfläche (13) strömenden Fluidstrom zu entfernen, ohne ein Spannungsniveau zu überschreiten, das der Dauerfestigkeitsgrenze des die Haut (12) bildenden Materials entspricht.

2. Enteisungsvorrichtung nach Anspruch 1, ferner dadurch gekennzeichnet, daß sie mehrere zusätzliche Aufblasrohre (27) aufweist, die zwischen der Stützfläche (16) und der Haut (12) angeordnet und zum Aufblasen in einem Ausmaß ausgebildet sind, das ausreicht, die Haut (12) unmittelbar über ihnen bis zu einem Grad zu verformen, der ausreicht, die auf ihrer eisansammelnden Oberfläche (13) befindlichen Eisablagerungen zu lösen und zu entfernen, ohne die Dauerspannungsfestigkeit des Materials zu überschreiten, aus dem die Haut (12) besteht.

3. Enteisungsvorrichtung nach Anspruch 1 oder 2, dadurch gekennzeichnet, daß wenigstens eines der Haupt- und der mehreren zusätzlichen Aufblasrohre (14,27) aus wenigstens einer Lage aus Gewebe besteht, das auf wenigstens einer Seite mit einer Gummierung beschichtet und vulkanisierend ausgehärtet ist.

4. Enteisungsvorrichtung nach einem der Ansprüche 1 bis 3, dadurch gekennzeichnet, daß wenigstens eines der Aufblasrohre (14,27) an der Stützfläche befestigt ist.

5. Enteisungsvorrichtung nach Anspruch 2 oder 3, ferner dadurch gekennzeichnet, daß sie eine Zwischenlage (24) aufweist, die zwischen der Haut (12) und der Stützfläche (16) so angeordnet ist, daß sie zwischen dem Hauptaufblasrohr (14) und der Haut (12) liegt, wobei die zusätzlichen Aufblasrohre (27) an der Zwischenlage (24) befestigt und derart angeordnet sind, daß sie zwischen der Zwischenlage (24) und der Haut (12) liegen.

6. Enteisungsvorrichtung nach einem der Ansprüche 1 bis 5, die eine Einrichtung zum zyklischen Aufblasen und Entleeren des Hauptaufblasrohres (14) aufweist.

7. Enteisungsvorrichtung nach einem der Ansprüche 1 bis 6, dadurch gekennzeichnet, daß wenigstens ein Hauptaufblasrohr (14) eine Trenneinrichtung aufweist, die das Hauptaufblasrohr (14) in wenigstens zwei rohrförmige Kammern (18,18') teilt, wobei die Trenneinrichtung derart ausgestaltet ist, daß sie die rohrförmigen Kammern (18,18') in ausreichendem Abstand voneinander abgrenzt, wodurch beim Aufblasen der rohrförmigen Strukturen die durch das Aufblasen der parallelen, voneinander beabstandeten Rohre induzierte Biegungsbeanspruchung in der Haut (12) eine Biegungsmikrodehnung in dem die Haut (12) bildenden Material nicht überschreitet, die einer Betriebslebensdauer für die Haut (12) entspricht und so bemessen ist, daß die rohrförmigen Strukturen wenigstens eine Million Aufblas-/Entleerungs-Zyklen aushalten.

8. Enteisungsvorrichtung nach einem der Ansprüche 1 bis 7, dadurch gekennzeichnet, daß die Haut (12) aus einem der Materialien Titan, Aluminium, Stahl, einschließlich Edelstahl, einem Kunststoff und einem Polymerverbundmaterial besteht.

9. Enteisungsvorrichtung nach einem der Ansprüche 1 bis 8, dadurch gekennzeichnet, daß sie ferner aufweist:
mehrere zusätzliche Aufblasrohre (27), die zwischen der Stützfläche (16) und der Haut (12) angeordnet und zum Aufblasen in einem Ausmaß ausgestaltet sind, das ausreicht, um die Haut (12) soweit zu verformen, daß Eisablagerungen auf ihrer eisansammelnden Oberfläche (13) gelöst und entfernt werden, ohne die Dauerspannungsfestigkeitsgrenze für das Material zu überschreiten, aus dem die Haut (12) besteht, sowie eine Einrichtung zum Aufblasen der zusätzlichen Aufblasrohre (27); und
eine Einrichtung zum Aufblasen der zusätzlichen Aufblasrohre (27), die wenigstens als eine direkte Verbindung zwischen den zusätzlichen Aufblasrohren (27) und dem Hauptaufblasrohr (14) ausgestaltet ist, wodurch zum Aufblasen des Hauptaufblasrohres (14) verwendetes Fluid anschließend in die zusätzlichen Aufblasrohre (27) passieren kann, wodurch im Anschluß an das Aufblasen des Hauptaufblasrohres (14) deren Aufblasen bewirkt wird.

10. Enteisungsvorrichtung nach Anspruch 9, wobei das Hauptaufblasrohr (14) und die zusätzlichen Aufblasrohre (27) an der Stützfläche (16) befestigt sind.

11. Enteisungsvorrichtung nach einem der Ansprüche 1 bis 10, dadurch gekennzeichnet, daß das zu enteisende Objekt eine Tragfläche mit einer Außenhaut (12,12') ist, die aus einem Material mit einem Elastizitätsmodul von wenigstens 40.000 kPa besteht, wobei die Tragfläche eine Vorderkante und eine Hinterkante aufweist, die von der Haut (12,12') gebildet werden.

12. Enteisungsvorrichtung nach einem der Ansprüche 9 bis 11, wobei die Verbindung zwischen den zusätzlichen Aufblasrohren (27) und dem Hauptaufblasrohr (14) wenigstens einen verengten Durchlaß (32) aufweist.

13. Enteisungsvorrichtung nach einem der Ansprüche 9 bis 12, die eine Einrichtung zum vollständigen Aufblasen des Hauptaufblasrohres (14) in einer raschen Abfolge von Impulsen in nicht mehr als 0,25 Sekunden aufweist.

14. Verfahren zum Enteisen eines Objekts mit einer mantelähnlichen Haut (12) mit einer eisansammelnden Oberfläche (13), wobei die Haut (12) einen Elastizitätsmodul von wenigstens 40.000 kPa aufweist, mit den folgenden Schritten:
Verwenden eines Fluids unter Druck,
periodisches Aufblasen wenigstens einer aufblasbaren rohrförmigen Hauptstruktur (14) in einem Hohlraum zwischen der Haut (12) und einer der eisansammelnden Oberfläche (13) abgewandt angeordneten Stützfläche (16) mit einem Druck, der ausreicht, angesammeltes Eis zu lösen und zu entfernen, jedoch nicht ausreicht, daß auf die Haut (12) einwirkende Spannungen eine Dauerfestigkeitsgrenze des Materials, aus dem die Haut (12) besteht, überschreiten,
wobei das Aufblasen entweder langsam in 0,5 bis 5 Sekunden erfolgt, oder
unter Verwendung einer raschen Abfolge von Impulsen.

15. Verfahren nach Anspruch 14, mit dem Schritt des Aufblasens der aufblasbaren rohrförmigen Hauptstruktur (14) in einer raschen Abfolge von Impulsen, wobei eine Reihe von fast augenblicklichen Verformungen der die aufblasbare rohrförmige Struktur (14) überlagernden Haut (12) erzeugt wird.

16. Verfahren nach Anspruch 14 oder 15, ferner mit dem Schritt des vollständigen Aufblasens der aufblasbaren rohrförmigen Hauptstruktur (14) in einer raschen Abfolge von Impulsen in nicht mehr als 0,25 Sekunden.

17. Verfahren nach einem der Ansprüche 14 bis 16, ferner gekennzeichnet durch den Schritt des Aufblasens zweier aufblasbarer rohrförmiger Hauptstrukturen, die voneinander soweit beabstandet sind, daß beim Aufblasen die durch das Aufblasen entstehende Biegeverformung der Haut (12) eine Mikrodehnung nicht überschreitet, die einer wesentlichen Wahrscheinlichkeit des Ermüdungsbruchs der Haut (12) in einer Million Aufblas-/Entleerungs-Zyklen der Rohre entspricht.

18. Verfahren nach einem der Ansprüche 14 bis 17, ferner gekennzeichnet durch den Schritt des Aufblasens von zwischen der Haut (12) und der Stützfläche (16) vorgesehenen mehreren zusätzlichen Rohren (27) zur Erzeugung einer Verformung der Haut (12), die ausreicht, um Eisablagerungen darauf zu lösen und zu entfernen.

19. Verfahren nach einem der Ansprüche 14 bis 18, ferner gekennzeichnet durch zyklisches Aufblasen und Entleeren der aufblasbaren rohrförmigen Hauptstruktur (14).

20. Verfahren nach einem der Ansprüche 14 bis 19, dadurch gekennzeichnet, daß es ferner die Schritte aufweist:
im Anschluß an das vollständige Aufblasen der rohrförmigen Hauptstruktur (14) erfolgendes Aufblasen von zwischen der Haut (12) und der Stützfläche (16) vorgesehenen mehreren, direkt mit der rohrförmigen Hauptstruktur (14) verbundenen zusätzlichen Rohren (27) zur Erzeugung einer Verformung der Haut (12), die ausreicht, um Eisablagerungen darauf zu lösen und zu entfernen; und
Aufblasen der zusätzlichen Rohre (27) unter Verwendung des für das Aufblasen der aufblasbaren rohrförmigen Hauptstruktur (14) verwendeten Fluids unter Druck.

21. Verfahren nach Anspruch 20, ferner mit dem Schritt des vollständigen Aufblasens der aufblasbaren rohrförmigen Hauptstruktur (14) in einer raschen Abfolge von Impulsen in nicht mehr als 0,10 Sekunden.

22. Verfahren nach einem der Ansprüche 14 bis 21, dadurch gekennzeichnet, daß das Objekt eine Tragfläche mit einer Vorderkante ist, wobei die Tragfläche derart ausgestaltet ist, daß sie eine Haut (12) mit einer eisansammelnden Oberfläche (13) aufweist und aus einem Material mit einem Elastizitätsmodul von wenigstens 40.000 kPa besteht, wobei sich das aufblasbare Rohr (14) in Spannweitenrichtung entlang der Vorderkante erstreckt, und ferner mit den Schritten:
unter Verwendung des beim Aufblasen des in Spannweitenrichtung verlaufenden Aufblasrohres (14) verwendeten Fluids unter Druck erfolgendes anschließendes Aufblasen mehrerer zusätzlichen Aufblasrohre (27), die in Spannweitenrichtung oder Tiefenrichtung zu der Vorderkante und zwischen der Stützfläche (16) und der Haut (12) angeordnet sind; wobei das Aufblasrohr (14) und die zusätzlichen Aufblasrohre (27) fluidmäßig direkt miteinander verbunden sind, wobei das Aufblasrohr (14) und die zusätzlichen Aufblasrohre (27) soweit aufgeblasen werden, daß eine gewünschte Verformung der Haut (12) erzeugt wird, die ausreicht, Eisablagerungen an ihrer eisansammelnden Oberfläche (13) zu lösen und in einen über die Tragfläche strömenden Luftstrom zu entfernen, jedoch nur bis zu einem Ausmaß, das nicht ausreicht, um ein Spannungsniveau zu überschreiten, das der Dauerfestigkeitsgrenze des die Haut (12) bildenden Materials entspricht.

23. Verfahren nach Anspruch 22, mit dem Schritt des pulsierenden Aufblasens des sich in Spannweitenrichtung erstreckenden Aufblasrohres (14).

## Revendications

1. Un dégivreur pour dégivrer un objet ayant une peau analogue à une feuille (12, 12') comprenant une surface d'accumulation de glace (13), la peau (12, 12') étant formée d'un matériau ayant un module d'élasticité d'au moins 40.000 kPa comprenant :
une surface de support (16) placée à l'opposé de la surface d'accumulation de glace (13) ;
au moins un tube de gonflage principal (14) placé entre la surface de support (16) et la peau (12) ;
des moyens pour introduire un fluide sous pression dans le tube de gonflage principal (14) ;
et des moyens pour dégonfler subséquemment le tube de gonflage principal (14),
les moyens pour introduire le fluide sous pression dans le tube de gonflage principal (14) réalisant l'introduction soit à un taux et selon une quantité suffisante pour gonfler lentement le tube de gonflage principal (14) en une période de 0,5 à 5 secondes selon une étendue désirée suffisante pour provoquer la déformation de la peau (12) selon un degré suffisant pour détacher les accumulations de glace sur celle-ci et déloger les accumulations de glace dans un courant de fluide circulant au-dessus de la surface d'accumulation de glace (13) sans dépasser un niveau de contrainte correspondant à une limite de résistance associée au matériau formant la peau (12) ou selon une série rapide d'impulsions et selon une quantité suffisante pour gonfler le tube de gonflage (14) à un degré désiré auquel une déformation désirée se produit sur la peau (12) pour détacher selon un degré suffisant les accumulations de glace sur celle-ci et déloger les accumulations de glace dans un courant de fluide circulant sur la surface d'accumulation de glace (13) sans dépasser un niveau de contrainte correspondant à une limite de résistance associée au matériau formant la peau (12).

2. Le dégivreur selon la revendication 1 caractérisé en outre en ce qu'il comprend une pluralité de tubes de gonflage supplémentaires (27) placés entre la surface de support (16) et la peau (12) agencés pour le gonflage selon une mesure suffisante pour déformer la peau (12) immédiatement sur celle-ci selon un degré suffisant pour détacher et déloger les accumulations de glace sur la surface d'accumulation de glace (13) de celle-ci sans dépasser la limite de résistance de contrainte pour le matériau à partir duquel la peau (12) est formée.

3. Le dégivreur selon la revendication 1 ou 2, caractérisé en ce qu'au moins l'un des tubes principaux et de la pluralité des tubes de gonflage supplémentaires (14, 27) est formé à partir d'au moins d'une épaisseur de tissu revêtu sur au moins une surface avec un composé caoutchouteux et durci par vulcanisation.

4. Le dévigreur selon l'une quelconque des revendications 1 à 3, caractérisé en ce qu'au moins un des tubes de gonflage (14, 27) est fixé à la surface de support.

5. Le dégivreur selon la revendication 2 ou 3 caractérisé, en outre, en ce qu'il comprend une épaisseur intermédiaire (24) placée entre la peau (12) et la surface de support (16) pour s'étendre entre le tube de gonflage principal (14) et la peau (12), les tubes de gonflage supplémentaires (27) étant fixés à l'épaisseur intermédiaire (24) et agencés pour s'étendre entre l'épaisseur intermédiaire (24) et la peau (12).

6. Le dégivreur selon l'une quelconque des revendications 1 à 5, comprenant des moyens pour gonfler et dégonfler le tube de gonflage principal (14) selon une manière cyclique.

7. Le dégivreur selon l'une quelconque des revendications 1 à 6, caractérisé en ce qu'au moins un tube de gonflage principal (14) comprend un moyen de cloisonnement divisant le tube de gonflage principal (14) en au moins une paire de compartiments tubulaires (18, 18'), le moyen de cloisonnement étant configuré pour définir les compartiments tubulaires (18, 18') selon une relation espacée suffisante si bien que lors du gonflage des structures tubulaires, la contrainte de flexion dans la peau (12) induite par le gonflage des tubes distants parallèles ne dépasse pas une microcontrainte de flexion dans le matériau formant la peau (12) correspondant à une durée de service pour la peau (12) et capable de recevoir au moins un million de cycles de gonflage/dégonflage des structures tubulaires.

8. Le dégivreur selon l'une quelconque des revendications 1 à 7, caractérisé en ce que la peau (12) est formée d'un élément de titane, d'aluminium, d'acier, y compris de l'acier inoxydable, de plastique et d'un composite polymère.

9. Le dégivreur selon l'une quelconque des revendications 1 à 8, caractérisé en ce qu il comprend en outre:
une pluralité de tubes de gonflage supplémentaires (27) placés entre la surface de support (16) et la peau (12) et agencés pour gonfler selon une mesure suffisante afin de déformer la peau (12) à un degré suffisant pour détacher et déloger les accumulations de glace sur la surface d'accumulation de glace (13) de celle-ci sans dépasser la limite de résistance de contrainte pour le matériau à partir duquel la peau (12) est formée et des moyens pour gonfler les tubes de gonflage supplémentaires (27) ; et
les moyens pour gonfler les tubes de gonflage supplémentaires (27) sont au moins une liaison directe entre les tubes de gonflage supplémentaires (27) et le tube de gonflage principal (14), agencée afin que le fluide utilisé lors du gonflage du tube de gonflage principal (14) puisse passer ensuite dans les tubes de gonflage supplémentaires (27) en provoquant le gonflage de ceux-ci après le gonflage du tube de gonflage principal (14).

10. Le dégivreur selon la revendication 9, dans lequel le tube de gonflage principal (14) et les tubes de gonflage supplémentaires (27) sont fixés à la surface de support (16).

11. Le dégivreur selon l'une quelconque des revendications 1 à 10, caractérisé en ce que l'objet à dégivrer est un plan à profil d'aile ayant une peau externe (12, 12') formée d'un matériau ayant un module d'élasticité d'au moins 40.000 kPa, le plan à profil d'aile ayant un bord antérieur et une surface postérieure définie de celle-ci par la peau (12, 12').

12. Le dégivreur selon l'une quelconque des revendications 9 à 11 dans lequel l'interconnexion entre les tubes de gonflage supplémentaires (27) et le tube de gonflage principal (14) comprend au moins un passage réduit (32).

13. Le dégivreur selon l'une quelconque des revendications 9 à 12, qui comprend des moyens pour gonfler totalement le tube de gonflage principal (14) selon une série rapide d'impulsions en pas plus de 0,25 seconde.

14. Procédé pour dégivrer un objet ayant une peau analogue à une coquille (12) comprenant une surface d'accumulation de glace (13), la peau (12) ayant un module d'élasticité d'au moins 40.000 kPa qui comprend les étapes consistant à :
utiliser un fluide sous pression,
gonfler périodiquement au moins une structure tubulaire principale gonflable (14) dans une cavité entre la peau (12) et une surface de support (16) placée à l'opposé de la surface d'accumulation de glace (13) à une pression suffisante pour détacher et déloger la glace accumulée mais insuffisamment élevée afin que les contraintes exercées sur la peau (12) ne dépassent pas une limite de résistance pour le matériau à partir duquel la peau (12) est formée,
à réaliser le gonflage soit lentement en 0,5 à 5 secondes, soit
en utilisant une série rapide d'impulsions.

15. Le procédé selon la revendication 14, qui comprend les étapes de gonflage de la structure tubulaire principale gonflable (14) selon une série rapide d'impulsions produisant une série de déformations pratiquement instantanées de la peau (12) recouvrant la structure tubulaire gonflable (14).

16. Le procédé selon la revendication 14 ou 15 qui comprend, en outre, l'étape de gonflage total de la structure tubulaire principale gonflable (14) selon une série rapide d'impulsions en pas plus de 0,25 seconde.

17. Procédé selon l'une quelconque des revendications 14 à 16, caractérisé, en outre, par l'étape de gonflage de deux structures tubulaires principales gonflables espacées l'une de l'autre selon une mesure suffisante pour assurer que lors du gonflage, la déformation de flexion de la peau (12) en raison du gonflage ne dépasse pas une micro-contrainte correspondant à une valeur essentiellement vraisemblable de défaut de fatigue de la peau (12) dans un million de cycles de gonflage/dégonflage des tubes.

18. Procédé selon l'une quelconque des revendications 14 à 17 caractérisé, en outre, en ce qu'il comprend l'étape de gonflage entre la peau (12) et la surface de support (16) d'une pluralité de tubes supplémentaires (27) pour produire une déformation de la peau (12) suffisante pour détacher et déloger les accumulations de glace sur celle-ci.

19. Procédé selon l'une quelconque des revendications 14 à 18, caractérisé en ce qu'il comprend, en outre, le gonflage et le dégonflage de la structure tubulaire gonflable principale (14) d'une manière cyclique.

20. Procédé selon l'une quelconque des revendications 14 à 19, caractérisé en ce qu'il comprend, en outre, les étapes consistant à :
gonfler entre la peau (12) et la surface de support (16) après l'obtention d'un gonflage total de la structure tubulaire principale (14), une pluralité de tubes supplémentaires (27) reliés directement à la structure tubulaire principale (14) pour produire une déformation de la peau (12) suffisante pour détacher et déloger les accumulations de glace sur celle-ci et
gonfler les tubes supplémentaires (27) en utilisant le fluide sous pression utilisé pour gonfler la structure tubulaire gonflable principale (14).

21. Procédé selon la revendication 20, qui comprend en outre, l'étape de gonflage total de la structure tubulaire gonflable principale (14) en une série rapide d'impulsions en pas plus de 0,10 seconde.

22. Procédé selon l'une quelconque des revendications 14 à 21, caractérisé en ce que l'objet est un plan à profil d'aile ayant un bord antérieur associé à celui-ci, le plan à profil d'aile étant configuré pour avoir une peau (12) ayant une surface d'accumulation de glace (13) et formée d'un matériau ayant un module d'élasticité d'au moins 40.000 kPa, le tube gonflable (14) s'étendant selon la portée le long du bord antérieur et qui comprend en outre les étapes consistant à :
gonfler subséquemment en utilisant le fluide sous pression utilisé lors du gonflage du tube de gonflage de portée (14), une pluralité de tubes de gonflage supplémentaires (27) disposés dans une relation de profondeur et de portée au bord antérieur et disposés entre la surface de support (16) et la peau (12), le tube de gonflage (14) et les tubes de gonflage supplémentaires (27) étant directement reliés entre eux pour l'écoulement de fluide, le tube de gonflage (14) et les tubes de gonflage supplémentaires (27) étant gonflés selon une mesure suffisante pour produire une déformation désirée dans la peau (12) suffisante pour détacher et déloger les accumulations de glace sur la surface d'accumulation de glace (13) de celle-ci dans un courant d'air circulant sur le plan à profil d'aile mais selon une mesure insuffisante pour dépasser un niveau de contrainte associé à une limite de résistance pour le matériau formant la peau (12).

23. Procédé selon la revendication 22, comprenant le stade de gonflage par impulsions du tube de gonflage de portée (14).
